# EUROPEAN PATENT SPECIFICATION

(11) **EP 3 213 949 B1**
(45) Date of publication and mention of the grant of the patent: **25.09.2019**
(21) Application number: 15855196.0
(22) Date of filing: 22.10.2015
(51) Int. Cl.: B60K 35/00, G02B 27/01, G02B 27/09

(54) **HEAD-UP DISPLAY DEVICE**
BLICKFELDANZEIGEVORRICHTUNG
DISPOSITIF D'AFFICHAGE TÊTE HAUTE

(30) Priority: 30.10.2014 JP 2014220925
(43) Date of publication of application: 06.09.2017
(73) Proprietor: Nippon Seiki Co., Ltd., Nagaoka-shi, Niigata 940-8580 (JP)
(72) Inventor: SATO,Genichiro, Nagaoka, Niigata (JP); TAKENOUCHI,Mamoru, Nagaoka, Niigata (JP); KOYAMA, Satoru, Nagaoka, Niigata (JP); FURUSAWA, Hiroyuki, Nagaoka, Niigata (JP)
(74) Representative: Carpmaels & Ransford LLP
(86) International application number: PCT/JP2015/079844
(87) International publication number: WO 2016/068017

(56) References cited:
- JP-A- H06 144 082
- JP-A- 2003 039 983
- JP-A- 2004 090 713
- JP-A- 2005 208 436
- JP-A- 2007 086 226
- JP-A- 2010 160 426
- JP-A- 2012 240 467
- JP-A- 2013 164 482
- JP-B2- 3 394 585
- US-A1- 2006 291 066

## Description

### TECHNICAL FIELD

The present invention relates to a head-up display device for effecting time taken for transition between a stopped state and an operating state.

### BACKGROUND ART

JP2003039983 discloses the device according to the preamble of claim 1.

A conventional head-up display device is, for example, disclosed in Patent Literature 1, Patent Literature 2, Patent Literature 3, Patent Literature 4, and Patent Literature 5. The conventional device is configured to move a position of a reflecting means for reflecting display light to a position where the sunlight does not enter a display in a housing through a reflecting means in a stopped state in which the device is not used, and return from a position in a stopped state in an operating state, thereby reducing the possibility that the sunlight enters the display in the housing via the reflecting means and deteriorates in a situation where the head-up display device is not used.

When shifting from the stopped state to the operating state, the head-up display device of Patent Literature 1 is capable of adjusting the position of the reflecting means by operating the operation switch. By setting the moving speed from the closed state to the open state faster with the start of use than the moving speed of the reflecting means by the operation of the operating switch, the time of returning from the stopped state to the operating state and displaying the virtual image is shortened.

In the head-up display device of Patent Document 2, as the display state changes from the operating state to the stopped state, for example, a display image consisting of "Good-Bye" disappears while moving, and the time for stably terminating the light source is effected.

### CITATION LIST PATENT

### LITERATURE

Patent Literature 1: Japanese Unexamined Patent Application Publication No. 2005-208436
Patent Literature 2: Japanese Unexamined Patent Application Publication No. 2013-164482
Patent Literature 3: Japanese Unexamined Patent Application Publication No. 2003-039983
Patent Literature 4: Japanese Patent Publication No. 3-394585
Patent Literature 5: US Unexamined Patent Application Publication No. 2006-291066

### SUMMARY OF THE INVENTION

### PROBLEMS TO BE SOLVED BY THE INVENTION

However, in the head-up display device disclosed in Patent Literature 1, since the display is started after the movement from the stopped state to the operating state is completed, the time from the stopped state to displaying a virtual image to a passenger without feeling uncomfortable is noteffected.

Further, in the head-up display device of Patent Literature 2, effects are not taken into consideration when shifting from the stopped state to the operating state, and there is a room for improvement in the effect at the time of transition from the operating state to the stopped state.

The present invention has been made in view of the above-described problems, and it is an object of the present invention to provide a head-up display device that effects the time required for a transition between a stopped state and an operating state.

### MEANS FOR SOLVING THE PROBLEM

The invention is defined by the claims. A head-up display device A according to the present invention, comprising: a projected member; a display means 3 for emitting display light; a reflecting mirror 5 for reflecting the display light; a drive means 50 for changing an angle of reflection of the display light by rotating the reflecting mirror 5; and a control means 6 that controls the drive means 50 and the display means 3 to irradiate the display light reflected by the reflecting mirror 5 to the projected member to cause a vehicle passenger to visually recognize a virtual image via the projected member, wherein the control means 6 changes a display mode of the display means 3 according to a position of the reflecting mirror 5, along with a transition between the stopped state and the operating state, when moving the mirror from one to the other between a first position corresponding to the stopped state and a second position corresponding to the operatingstate.

### EFFECT OF THE INVENTION

According to the present invention, it is possible to provide a head-up display device with a high added value by effecting time taken for a transition between the stopped state and the operating state.

### BRIEF DESCRIPTION OF THE DRAWINGS

FIG. 1 is a mounting view of a head-up display device according to an embodiment of the present invention.
FIG. 2 is a schematic configuration diagram of the same embodiment. (a) to (d) of the figure show optical paths of the display light L or the sunlight SL when the concave mirror 5 is located at the positions 5 a to 5 d, respectively.
FIG. 3 is a diagram not according to the invention showing a virtual image display range according to the embodiment. (a) to (d) of the figure show display positions of the virtual image V when the concave mirror 5 is located at the positions 5 a to 5 d, respectively.

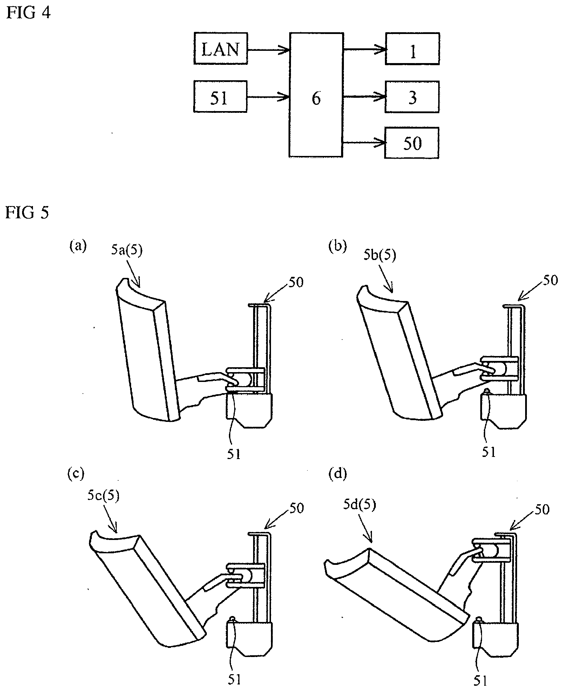

FIG. 4 is an electrical configuration diagram of the same embodiment.
FIG. 5 is a view showing a rotation mechanism of a concave mirror according to the same embodiment. (a) to (d) of the figure show states of the drive mechanism when the concave mirror 5 is located at the positions 5 a to 5 d, respectively.
FIG. 6 is a flowchart showing rotation control of the concave mirror according to the same embodiment.
FIG. 7 is a diagram not according to the invention showing a first display example of the embodiment. (a) to (d) of the figure show states of the virtual image V and the display light L when the concave mirror 5 is located at the positions 5 a to 5 d, respectively.
FIG. 8 is a diagram showing a second display example of the same embodiment according to the invention. (a) to (d) of the figure show states of the virtual image V and the display light L when the concave mirror 5 is located at the positions 5 a to 5 d, respectively.

### MODE FOR CARRYING OUT THE INVENTION

Hereinafter, an embodiment in which the present invention is applied to a head-up display device mounted on a vehicle will be described with reference to the accompanying drawings.

The head-up display device A according to the present invention mainly comprises a light source 1, a condenser lens 2, a liquid crystal display panel 3, a plane mirror 4, a concave mirror 5, a control means 6, and a housing 7 for housing them. In accordance with the control of the control means 6, the head-up display device A reflects the display light L emitted from a display (display means) comprising the light source 1, the condenser lens 2 and the liquid crystal display panel 3, by the plane mirror 4 and the concave mirror 5, and emits the light from the exit port 70 of the housing 7. The display light L emitted from the exit port 70 is projected onto the windshield (projected member) of the vehicle so that the virtual image V is viewed superimposed on the scenery from a passenger's eyepoint E in front of the windshield.

The light source 1 is a light emitting element that emits a light beam such as an LED, for example, and is mounted on an alumina (ceramic) substrate having an excellent thermal conductivity, and is lit with arbitrary luminance according to the control of the control means 6 to be described later.

The condenser lens 2 is made of an optical resin, and is composed of a convex lens having a function of converging the light beam emitted from the light source 1 into parallel light.

The liquid crystal display panel 3 is a display panel, in which polarizing plates are attached to front and rear surfaces of a liquid crystal cell in which a liquid crystal layer is sealed in a pair of translucent substrates with a transparent electrode film formed thereon, and displays an image according to the control of the control means 6 to be described later.

By making the light beam emitted from the light source 1 into parallel light by the condenser lens 2 and illuminating the liquid crystal display panel 3 displaying the image from the backside, the display light L is emitted from a display comprising a light source 1, a condenser lens 2, and a liquid crystal display panel 3.

The plane mirror 4 is a reflecting mirror formed by depositing a metal such as aluminum on a resin material such as polycarbonate to form a reflecting surface on a plane. By increasing the optical path length of the display light L by the plane mirror 4, it is possible to increase the distance from the windshield to the virtual image V, and by imaging the virtual image V further away, information display is harmonized with forward confirmation during driving.

The concave mirror 5 is a reflecting mirror formed by depositing a metal such as aluminum on a resin material such as polycarbonate to form a concave reflecting surface. The concave mirror 5 has a function of enlarging the display light L emitted from the display and a function of correcting the distortion of the display light L caused by the curved surface of the windshield in a concave curved surface.

In the concave mirror 5, the concave mirror 5 is rotatable at positions of 5 a to 5 d by a drive mechanism 50 comprising a lead screw mechanism or the like which is moved by rotational power such as a stepping motor or the like. The drive mechanism 50 is provided with a switch 51 that is pushed when the concave mirror 5 reaches the position 5 a. The drive mechanism 50 is controlled by a control means 6 to be described later, and grasps where the concave mirror 5 is located by counting the number of driving steps of the stepping motor with the point where the switch 51 is pushed as a reference position (origin).

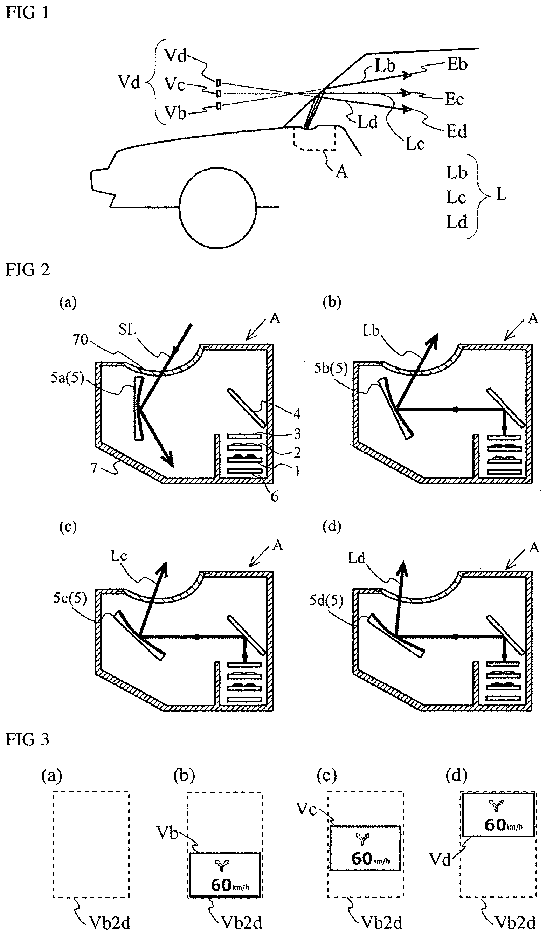

When the concave mirror 5 is at the position 5 a, the display light L does not form a virtual image on the windshield as shown in FIG. 2 (a), and the sunlight SL does not reach the display unit by reflecting the concave mirror 5, thus the head-up display device A is in a stopped state. When the concave mirror 5 is rotated to this position 5 a, it is possible to reduce the possibility that the display is deteriorated by the sunlight SL when the head-up display device A is not in use (for example, while the vehicle is parked and stopped).

When the concave mirror 5 is at the position 5 b, 5 c, 5 d, as shown in FIG. 2 (b), the display light L b, L c, L d form an image as a virtual image Vb at positions where the appearance suitable for viewing from the eyepoints E b, E c, Ed on the windshield, and the head-up display device A is in an operating state. When the head-up display device A is in the operating state, by rotating the concave mirror 5 to the positions 5 b to 5 d, it is possible to display the virtual image V at an arbitrary position in the virtual image display range Vb2d, as a result, it is possible to adjust the display to an appropriate appearance between the passenger's eyepoints Eb and Ed.

The control means 6 is, for example, a rigid circuit board on which a storage device, a computing device and an input / output interface are mounted, and is electrically connected to the light source 1, the liquid crystal display panel 3, the drive means 50, the switch 51 and the car network LAN. The control means 6 inputs various information of the vehicle (for example, a vehicle speed, an engine speed, a gear position, route guidance information, etc.) from the in-vehicle network LAN, controls the light source 1 and the liquid crystal display panel 3 to emit each information 80 of the vehicle from the display as the display light L, and causes the passenger to visually recognize it as the virtual image V.

When the head-up display device A is in the operating state, the control means 6 can rotate the concave mirror 5 to an arbitrary position of the positions 5 b to 5 d by, for example, an operation switch (not shown) mounted on the steering of the vehicle, and stores the position as an initial operating position.

Next, rotation control of the concave mirror and display control of the display will be described.

### (Step S1)

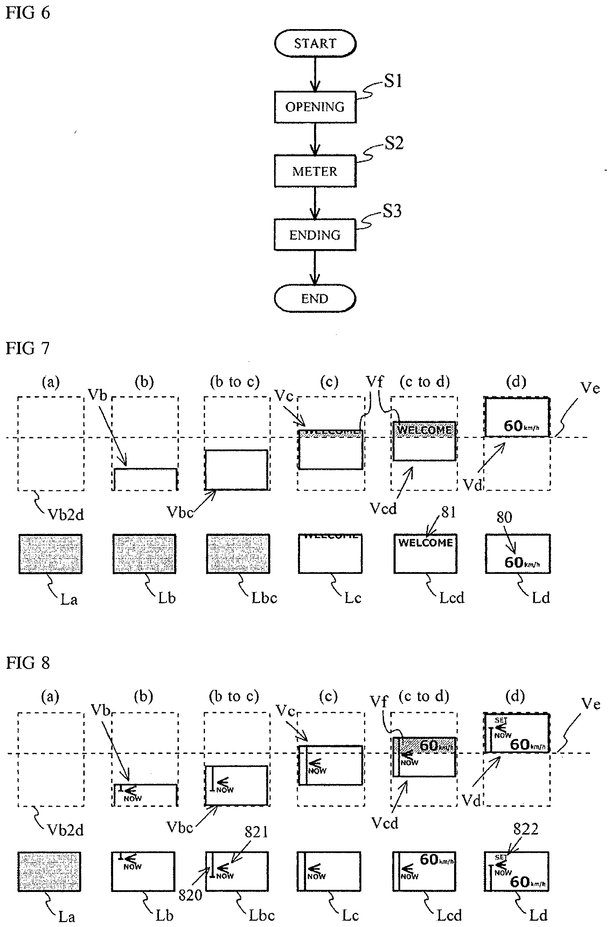

The control means 6 performs an opening effect in which the head-up display device A returns from the stopped state to the operating state. Before the opening effect, the control means 6 performs a zero-reset operation to rotate the concave mirror 5 to the position 5 a (origin). After the zero-reset operation, the control means 6 rotates the concave mirror 5 to the initial operation position, and changes the display mode of the display according to the position of the concave mirror 5. Upon completion of the opening effect, the control means 6 proceeds to step S 2. This opening effect will be described below as an opening effect example 1 (FIG. 7) and an opening effect example 2 (FIG. 8) in the case where the initial operating position is set as the position 5 d.

### (Opening effect example 1) - NOT ACCORDING TO THE INVENTION

FIG. 7 shows the opening effect example 1. (a) to (d) of the figure show the states of the virtual image V and the display light L when the concave mirror 5 is located at the positions 5 a to 5 d, respectively. In the case where the initial operating position is set as the position 5 d, the opening effect shifts in the order of (a), (b), (b to c), (c), (c to d), and (d).

When the concave mirror 5 is at the position 5 a, the control means 6 first makes the display non-display. Next, the control means 6 rotates the position of the concave mirror 5 from 5 a to 5 d. When the upper end of the display range of the virtual image corresponding to the current position of the concave mirror 5 is located higher than the lower end Ve of the virtual image vd corresponding to the position 5 d set as the initial operating position, the control means 6 displays an effect design of a character string composed of, for example, "WELCOME" in a display range V f, which is obtained by a logical product of the display range and the display range of the virtual image corresponding to the current position of the concave mirror 5. In turning the position of the concave mirror 5 from 5 a to 5 d, the control means 6 sets the rotation speed while the virtual image V is not displayed faster than the rotation speed during the display of the virtual image V, and shortens the time until the virtual image V is displayed. The rotation speed of the concave mirror 5 during the display of the virtual image V is preferably determined considering noise generation due to the resonance of the period of the drive pulse of the stepping motor used for the drive means 50 and the surrounding members (for example, the lead screw mechanism and the housing 7). When the position of the concave mirror 5 has been moved to the position 5 d set as the initial operating position, the control means 6 proceeds to step S 2.

### (Opening effect example 2) - ACCORDING TO THE INVENTION

FIG. 8 shows the opening effect example 2. (a) to (d) of the figure show the states of the virtual image V and the display light L when the concave mirror 5 is located at the positions 5 a to 5 d, respectively. In the case where the initial operating position is set as the position 6 d, the opening effect shifts in the order of (a), (b), (b to c), (c), (c to d), and (d).

When the concave mirror 5 is at the position 5 a, the control means 6 first makes the display non-display. Then, the control means 6 starts rotating the position of the concave mirror 5 from 5 a to 5 d, and when reaching the position 5 b that is a position closest to the stopped position in the operating state, the control means 6 starts displaying the current position of the concave mirror 5 in the movable range of the concave mirror 5 in the operating state by the scale 820, the current position 821, and the set position 822. For the scale, a design is formed over the virtual image range V cd corresponding to the movable range in the operating state, and a part of it is displayed as a virtual image at each position of the concave mirror 5. The current position 821 and the set position 822 are, for example, composed of designs combining an arrow pointing to the position of the scale 820 and a character string "NOW" or "SET" indicating the current position and the set position. If the upper end of the display range of the virtual image corresponding to the current position of the concave mirror 5 is located higher than the lower end of the virtual image v d corresponding to the position 5 d set as the initial operating position, the control means 6 displays a remaining fuel, a travel distance, a traveling speed of a vehicle in this order in a display range V f obtained by the logical product of the display range and the display range of the virtual image corresponding to the current position of the concave mirror 5, such that as the display range V f increases, the display items are increased and displayed in order, when displaying, for example, a travel distance, a traveling speed, a remaining fuel, etc. of a vehicle as various kinds of information 80 of a vehicle as the various information of the vehicle. When the position of the concave mirror 5 has been moved to the position 5 d set as the initial operating position, the control means 6 proceeds to step S 2.

### (Step S2)

The control means 6 periodically updates the various kinds of information 80 of the vehicle in accordance with the input from the in-vehicle network LAN until a transition request to the stopped state, and displays it on the instrument. The control means 6 judges that the vehicle has stopped on the basis of the state such as, for example, the ignition of the vehicle is off, the gear position of the vehicle is parking, and determines it to be a transition request to the stopped state. When determining a transition request to the stop state, the control means 6 proceeds to step S 3.

### (Step S 3)

The control means 6 performs an ending effect in which the head-up display device A shifts from the operating state to the stopped state. The control means 6 starts turning from the current position of the concave mirror 5 to the position 5 a (origin), and performs the ending effect to perform the effect in the reverse order to the opening effect. It should be noted that it is better to replace the effect design of the character string composed of "WELCOME" with the character string composed of "GOOD-BYE" in the case where the effect is performed in the reverse order of the opening effect shown in FIG. 7.

The embodiment of the present invention has been described above. By configuring in this way, it is possible to provide a head-up display device with a high added value by effecting the time taken for transition between the stopped state and the operating state.

In addition, as compared with the conventional technique in which display is started after completion of movement from the stopped state to the operating state, display starts at an early stage, and the passenger feels that the startup time of the head-up display device A is short. Specifically, in comparison with the opening effect example 1 (FIG. 7) in the case where the initial operating position is set as the position 5 d, in comparison with the prior art, since the concave mirror was moved to the position 5 d and displayed, in the embodiment of the present invention, display is started at a position c before the position 5 d. In the opening effect example 2 (FIG. 8), the display is started at a position b before the position 5 d, and the passenger feels like the head-up display device starts up in a shorter time.

Further, as shown in the effect example 2 (FIG. 8), by displaying the current position of the concave mirror 5 in the movable range in the operating state of the concave mirror 5, during the transition between the stopped state and the operating state, the passenger can know from where to how the position of the concave mirror 5 is set during the transition between the stopped state and the active state, during the transition between the stopped state and the active state, and does not feel bored during the transition between the stopped state and the operating state as compared with the case where there is no display.

Furthermore, as shown in the effect example 1 (FIG. 7), the control means 6 shortens the time until the virtual image V is displayed by setting the rotation speed while the virtual image V is not displayed to be faster than the rotation speed during the display of the virtual image V, when rotating the position of the concave mirror 5 from 5 a to 5 d.

Various improvements and design changes are possible without departing from the scope of the claims of the present invention. For example, the projected member is not limited to a windshield of a vehicle, but may be a combiner or the like.

Further, although the configuration in which the position of the concave mirror 5 corresponding to the stopped state is rotated to the position 5 b side in the range from the operating position 5 b to the position 5 d, the configuration is not limited to this, and by further turning to the position 5 d side, the position at which the sunlight SL is not irradiated on the display may be set to a stopped state.

The current position of the concave mirror 5 in the movable range of the concave mirror 5 in the operating state may be displayed for a certain period of time in response to a change in the position of the concave mirror 5 in addition to being displayed during the transition between the stopped state and the operating state.

### INDUSTRIAL APPLICABILITY

The present invention is suitable as a vehicle display device mounted on a vehicle.

### DESCRIPTION OF REFERENCE NUMERALS

- 1: Light source
- 2: Condenser lens
- 3: Liquid crystal display panel
- 4: Plane mirror
- 5: Concave mirror
- 6: Control means
- 7: Housing
- 70: Exit port
- 80: Vehicle information
- 81: Effect design
- 820: Scale
- 821: Current position
- 822: Set position
- A: Head-up display device
- E: Eyepoint
- L: Display light
- V: Virtual image

## Claims

1. A head-up display device (A), comprising:
a projected member;
a display means (1, 3) for emitting display light (L);
a reflecting mirror (5) for reflecting the display light (L);
a drive means (50) for changing an angle of reflection of the display light (L) by rotating the reflecting mirror (5); and
a control means (6) that controls the drive means (50) to rotate the reflecting mirror (5) from a first position (5a) to a plurality of second positions (5b, 5c, 5d) and controls the display means (1,3) to emit the display light (L), wherein:
in the first position (5a), the display means (1, 3) does not emit the display light (L), and
in the second positions (5b, 5c, 5d), the display means emits the display light, and the reflecting mirror (5) reflects the display light (L) to the projected member to cause a vehicle passenger to visually recognize a virtual image (V) via the projected member,
**characterized in that**, in the second positions (5b, 5c, 5d), the control means (6) causes the display means (1, 3) to display a scale (820) indicating the movable range of the reflecting mirror (5) and a current position (821) on the scale (820) according to the current position of the reflecting mirror (5).

2. The head-up display device according to claim 1, wherein
the control means (6) causes the drive means (50) to rotate the reflecting mirror (5) from a first position (5a) to an initial position of the second positions (5b, 5c, 5d), and causes, in the second positions (5d, 5c, 5d), the display means (1, 3) to display a set position (822) on the scale (820) indicating the initial position in the movable range of the reflecting mirror (5).

3. The head-up display device according to claim 1, wherein
the reflecting mirror (5) is a concave mirror.

## Patentansprüche

1. Head-Up-Display-Vorrichtung (A), umfassend:
ein projektionsempfangendes Glied;
ein Anzeigemittel (1, 3) zum Emittieren von Anzeigelicht (L);
einen reflektierenden Spiegel (5) zum Reflektieren des Anzeigelichts (L);
ein Antriebsmittel (50) zum Ändern eines Reflexionswinkels des Anzeigelichts (L) durch das Drehen des reflektierenden Spiegels (5); und
ein Steuermittel (6), das das Antriebsmittel (50) steuert, den reflektierenden Spiegel (5) von einer ersten Position (5a) zu mehreren zweiten Positionen (5b, 5c, 5d) zu drehen, und das Anzeigemittel (1, 3) steuert, das Anzeigelicht (L) zu emittieren, wobei:
in der ersten Position (5a) das Anzeigemittel (1, 3) kein Anzeigelicht (L) emittiert, und
in den zweiten Positionen (5b, 5c, 5d) das Anzeigemittel das Anzeigelicht emittiert und der reflektierende Spiegel (5) das Anzeigelicht (L) zu dem projektionsempfangenden Glied reflektiert, um zu bewirken, dass ein Fahrzeuginsasse ein virtuelles Bild (V) über das projektionsempfangende Glied visuell erkennt,
**dadurch gekennzeichnet, dass** das Steuermittel (6) in den zweiten Positionen (5b, 5c, 5d) bewirkt, dass das Anzeigemittel (1, 3) eine Skala (820), die den bewegbaren Bereich des reflektierenden Spiegels (5) angibt, und eine aktuelle Position (821) auf der Skala (820) gemäß der aktuellen Position des reflektierenden Spiegels (5) anzeigt.

2. Head-Up-Display-Vorrichtung nach Anspruch 1, wobei das Steuermittel (6) bewirkt, dass das Antriebsmittel (50) den reflektierenden Spiegel (5) von einer ersten Position (5a) zu einer Anfangsposition der zweiten Positionen (5b, 5c, 5d) dreht, und bewirkt, dass das Anzeigemittel (1, 3) in den zweiten Positionen (5d, 5c, 5d) eine festgelegte Position (822) auf der Skala (820) anzeigt, die die Anfangsposition in dem bewegbaren Bereich des reflektierenden Spiegels (5) angibt.

3. Head-Up-Display-Vorrichtung nach Anspruch 1, wobei der reflektierende Spiegel (5) ein konkaver Spiegel ist.

## Revendications

1. Dispositif d'affichage tête haute (A) comprenant :
un élément projeté ;
un moyen d'affichage (1, 3) pour émettre une lumière d'affichage (L) ;
un miroir réfléchissant (5) pour réfléchir la lumière d'affichage (L) ;
un moyen d'entraînement (50) pour changer un angle de réflexion de la lumière d'affichage (L) en faisant tourner le miroir réfléchissant (5) ; et
un moyen de commande (6) qui commande le moyen d'entraînement (50) pour faire tourner le miroir réfléchissant (5) depuis une première position (5a) jusqu'à une pluralité de secondes positions (5b, 5c, 5d) et qui commande le moyen d'affichage (1, 3) pour émettre la lumière d'affichage (L), dans lequel :
à la première position (5a), le moyen d'affichage (1, 3) n'émet pas la lumière d'affichage (L) et
aux secondes positions (5b, 5c, 5d), le moyen d'affichage émet la lumière d'affichage et le miroir réfléchissant (5) réfléchit la lumière d'affichage (L) vers l'élément projeté pour contraindre un passager du véhicule à reconnaître visuellement une image virtuelle (V) par le biais de l'élément projeté,
**caractérisé en ce que**, aux secondes positions (5b, 5c, 5d), le moyen de commande (6) contraint le moyen d'affichage (1, 3) à afficher une échelle (820) indiquant la plage mobile du miroir réfléchissant (5) et une position actuelle (821) sur l'échelle (820) en fonction de la position actuelle du miroir réfléchissant (5).

2. Dispositif d'affichage tête haute selon la revendication 1, dans lequel
le moyen de commande (6) contraint le moyen d'entraînement (50) à faire tourner le miroir réfléchissant (5) depuis une première position (5a) jusqu'à une position initiale des secondes positions (5b, 5c, 5d) et contraint, aux secondes positions (5d, 5c, 5d), le moyen d'affichage (1, 3) à afficher une position définie (822) sur l'échelle (820) indiquant la position initiale dans la plage mobile du miroir réfléchissant (5) .

3. Dispositif d'affichage tête haute selon la revendication 1, dans lequel
le miroir réfléchissant (5) est un miroir concave.
